# EUROPEAN PATENT APPLICATION

(11) **EP 4 723 276 A1**
(43) Date of publication of application: **08.04.2026**
(21) Application number: 25739035.1
(22) Date of filing: 09.01.2025
(51) Int. Cl.: H01M 10/0562, H01M 10/052, C01B 25/14, H01B 1/10

(54) **SULFIDE-BASED SOLID ELECTROLYTE AND METHOD FOR PREPARING SAME**

(30) Priority: 09.01.2024 KR 20240003779
(71) Applicant: Solivis Inc., Hanam-si, Gyeonggi-do 12939 (KR)
(72) Inventor: SHIN, Dong Wook, Guri-si, Gyeonggi-do 11921 (KR); LEE, Young Min, Seoul 01362 (KR); KIM, Sung Jae, Yangju-si, Gyeonggi-do 11523 (KR)
(74) Representative: Klöckner, Christoph
(86) International application number: PCT/KR2025/000506
(87) International publication number: WO 2025/150922

(57) **Abstract**

The present disclosure relates to a sulfide-based solid electrolyte including an argyrodite-based compound that contains lithium, phosphorus, sulfur, a halogen element, and a Group 13 element and has an argyrodite crystal structure. The sulfide-based solid electrolyte of the present disclosure may exhibit enhanced electrochemical stability and atmospheric stability through substitution of some in the crystal structure with the Group 13 element.

## Description

### Technical Field

The present disclosure relates to a sulfide-based solid electrolyte and a method of preparing the same.

### Background Art

Lithium secondary batteries have been applied to small devices such as mobile phones and notebook computers, but have recently been applied to and commercialized in medium and large devices such as energy storage systems (ESSs) and electric vehicles (EVs). Thus, lithium secondary batteries require high energy density and high stability.

A lithium secondary battery uses an organic liquid electrolyte to which a lithium salt is added, and thus has a potential risk of not only leakage of the electrolyte but also the consequent ignition and explosion.

Accordingly, there has recently been increasing interest in all-solid-state batteries that use solid electrolytes rather than liquid electrolytes to enhance the safety of lithium secondary batteries.

Solid electrolytes are divided into oxide-based and sulfide-based solid electrolytes, and sulfide-based solid electrolytes are mainly used as solid electrolytes due to having high lithium-ion conductivity and being stable over a wide voltage range, compared to oxide-based solid electrolytes.

Sulfide-based solid electrolytes can generally be divided into LGPS(Li₁₀GeP₂S₁₂)-based solid electrolytes, LPS(Li₇P₃S₁₁)-based solid electrolytes, LPSH(Li₇₋ₓPS₆₋ₓHaₓ)-based solid electrolytes (Ha is a halogen element or polyatomic anion (molecular anion), which is one or a combination of two or more thereof, and 0.5 < x < 2), and the like. A solid electrolyte consisting of an LGPS-, LPS- or LPSX-based compound has a weak phosphorus-sulfur bonding strength in the unit crystal structure of the compound due to the difference in electronegativity between phosphorus and sulfur elements, i.e., only 0.39. Thus, when charging and discharging are repeated, the phosphorus-sulfur bonding is destroyed, leading to electrolyte decomposition, resulting in reduced lifespan of a battery, and sulfur reacts with moisture in the air, resulting in unstable operation of a battery, such as generation of hydrogen sulfide that is harmful to the human body.

### Disclosure of Invention

### Technical Problem

The present disclosure provides a structurally stable sulfide-based solid electrolyte that does not undergo structural deformation or decomposition even during repeated charging and discharging.

### Solution to Problem

To achieve the above-described objective, an embodiment of the present disclosure relates to a sulfide-based solid electrolyte including an argyrodite-based compound that contains lithium, phosphorus, sulfur, a halogen element, and a Group 13 element, and has an argyrodite crystal structure.

### Advantageous Effects of Invention

A sulfide-based solid electrolyte of the present disclosure can exhibit enhanced electrochemical stability and atmospheric stability through substitution of some elements in a crystal structure with a Group 13 element.

### Brief Description of Drawings

FIG. 1 is a schematic flowchart illustrating a method of preparing a sulfide-based solid electrolyte according to an embodiment of the present disclosure.
FIG. 2 is a schematic flowchart illustrating a method of preparing a sulfide-based solid electrolyte according to another embodiment of the present disclosure.
FIG. 3 is a graph showing XRD measurement results according to embodiments.
FIG. 4 is a graph showing XRD measurement results according to other embodiments.

### Best Mode for Carrying out the Invention

To achieve the above-described objective, an embodiment of the present disclosure relates to a sulfide-based solid electrolyte including an argyrodite-based compound that contains lithium, phosphorus, sulfur, a halogen element, and a Group 13 element, and has an argyrodite crystal structure.

The Group 13 element may be substituted in an amount of 0.5 mol% to 5 mol%bonding

The Group 13 element may include one or more elements selected from boron, aluminum, gallium, and indium.

The Group 13 element may suppress the generation of hydrogen sulfide gas by bonding to the sulfur.

To achieve the above-described objective, another embodiment of the present disclosure relates to a method of preparing a sulfide-based solid electrolyte, the method including preparing at least two precursors containing lithium, phosphorus, sulfur, a halogen element, and a Group 13 element, producing a precursor mixture by mixing the at least two precursors, and heat-treating the precursor mixture, wherein the precursor containing the Group 13 element includes one or more compounds selected from B₂S₃, Al₂S₃, Ga₂S₃, and In₂S₃.

The method may further include, before the heat treatment, drying the precursor mixture.

The precursor containing the Group 13 element may be added in an amount of 0.5 mol% to 5 mol% with respect to the total lithium.

In the production of the precursor mixture by mixing the at least two precursors, the at least two precursors may be mixed through mechanical milling or wet milling.

### Mode for the Invention

Hereinafter, exemplary embodiments of the present disclosure will be described in detail, and the terms or words used in the specification and claims should not be construed as being limited to ordinary or dictionary meanings and should be construed as meanings and concepts consistent with the technical spirit of the present disclosure.

Throughout the specification, terms such as "first," "second," and the like are not used as limited meanings, but are used to distinguish one component from another.

Throughout the specification, an expression in the singular includes an expression in the plural unless the context clearly indicates otherwise.

Throughout the specification, term such as "include," "have," or the like is used to indicate the presence of stated features or components, but not to preclude the possibility of the addition of one or more other features or components.

Throughout the specification, when a portion of a film, a region, a component, or the like is referred to as being "above" or "on" another portion, it includes not only a case in which the portion is directly on the other portion, but also a case in which other films, other regions, other components, or the like are present therebetween.

Reference numerals in each of steps are used for convenience of explanation, and are not used to explain the order of the steps. Each step may be performed in an order different from the stated order unless the context clearly states a specific order otherwise. That is, the steps may be performed in the same order as the stated order, may be performed substantially at the same time, or may be performed in reverse order.

Hereinafter, embodiments of the present disclosure will be described. However, the following exemplary embodiments of the present disclosure are not intended to limit the scope of the present disclosure, and various modified forms of the content described in this specification may be embodied by those of ordinary skill in the art within the scope of the present disclosure.

The present disclosure relates to a sulfide-based solid electrolyte and a method of preparing the same.

An embodiment of the present disclosure relates to a sulfide-based solid electrolyte. According to the embodiment, the sulfide-based solid electrolyte may exhibit enhanced electrochemical stability and atmospheric stability through substitution of some elements in a crystal structure with a Group 13 element.

A sulfide-based electrolyte for an all-solid-state battery, according to an embodiment of the present disclosure, may be used in an all-solid-state battery, and the all-solid-state battery may include an anode, a cathode, and a solid electrolyte layer between the anode and the cathode.

The anode may include an anode current collector and an anode active material layer disposed on a surface of the anode current collector.

An anode active material that may be included in the anode active material layer may include one or more selected from the group consisting of lithium (Li), amorphous carbon, gold (Au), platinum (Pt), palladium (Pd), silicon (Si), silver (Ag), aluminum (Al), bismuth (Bi), tin (Sn), and zinc (Zn).

A binder that may be included in the anode active material layer may enhance binding between the anode active material and a conductive material and binding of the anode active material to the anode current collector. The anode binder may include, for example, polyvinylidene fluoride (PVDF), polyvinyl alcohol (PVA), carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber, fluororubber, various copolymers thereof, and the like.

A conductive material that may be included in the anode active material layer may be used to further enhance the conductivity of the anode active material. Such a conductive material is not particularly limited as long as it does not cause chemical changes in a battery, and examples thereof may include: graphite such as natural graphite or artificial graphite; carbon black such as carbon black, acetylene black, Ketjen black, channel black, furnace black, lamp black, thermal black, and the like; conductive fibers such as carbon fibers, metal fibers, or the like; metal powders such as fluorinated carbon powder, aluminum powder, copper powder, nickel powder, silver powder, and the like; conductive whiskers such as zinc oxide, potassium titanate, and the like; conductive metal oxides such as titanium oxide and the like; polyphenylene derivatives; carbon nanotubes; and the like.

The anode current collector may be made of a material that is conductive and does not react with lithium without causing chemical changes in a battery, and may include various forms such as a film, sheet, foil, net, porous body, foam, or non-woven fabric having fine irregularities formed on a surface thereof. For example, the anode current collector may include one or more selected from the group consisting of copper (Cu), stainless steel (SS), titanium (Ti), iron (Fe), cobalt (Co), and nickel (Ni).

The cathode may include a cathode current collector and a cathode active material layer disposed on a surface of the cathode current collector.

A cathode active material that may be included in the cathode active material layer may include one or more selected from lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganese oxide, lithium iron phosphate, and the like, nickel sulfide, copper sulfide, lithium sulfide, iron oxide, or vanadium oxide. However, the present disclosure is not necessarily limited thereto, and any cathode active material used in the art may be used.

A binder that may be included in the cathode active material layer may enhance binding between the cathode active material and a conductive material and binding of the cathode active material to the cathode current collector. Examples of such binders include polyvinylidene fluoride (PVDF), polyvinyl alcohol (PVA), carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated EPDM, styrene-butadiene rubber, fluororubber, various copolymers thereof, and the like.

A conductive material that may be included in the cathode active material layer may be used to further enhance the conductivity of the cathode active material. Such a conductive material is not particularly limited as long as it does not cause chemical changes in a battery, and examples thereof may include: graphite such as natural graphite or artificial graphite; carbon black such as carbon black, acetylene black, Ketjen black, channel black, furnace black, lamp black, thermal black, and the like; conductive fibers such as carbon fibers, metal fibers, or the like; metal powders such as fluorinated carbon powder, aluminum powder, copper powder, nickel powder, silver powder, and the like; conductive whiskers such as zinc oxide, potassium titanate, and the like; conductive metal oxides such as titanium oxide and the like; polyphenylene derivatives; carbon nanotubes; and the like.

The cathode current collector may be made of stainless steel, aluminum, nickel, titanium, calcined carbon, or aluminum or stainless steel that is surface-treated with carbon, nickel, titanium, silver, or the like. In other embodiments, the cathode current collector may increase adhesion to the cathode active material by forming fine irregularities on a surface thereof. For example, the cathode current collector may be used in various forms such as a film, a sheet, foil, a net, a porous body, a foam, non-woven fabric, and the like.

The solid electrolyte layer may be disposed between the anode active material layer and the cathode active material layer.

The solid electrolyte may contain sulfur (S) and have ionic conductivity of a metal belonging to Group 1 or Group 2 of the periodic table. That is, the solid electrolyte may include a sulfide-based solid electrolyte.

The sulfide-based solid electrolyte according to an embodiment of the present disclosure may include an argyrodite-based compound that contains lithium, phosphorus, sulfur, a halogen element, and a Group 13 element, and has an argyrodite crystal structure.

The argyrodite crystal structure is an orthorhombic crystal system, and may include, for example, a crystal structure of a compound having a general formula of A₆BC₅D, wherein an A site includes an alkali metal having a monovalent positive charge, a B site includes phosphorus (P) or arsenic (As) having a pentavalent positive charge, a C site includes oxygen, sulfur or selenium (Se) having a divalent negative charge, and a D site includes a halogen having a monovalent negative charge. The alkali metal may include lithium, sodium, or potassium, and the halogen may include fluorine, chlorine, bromine, or iodine.

The argyrodite-based compound has excellent crystallinity and lattice constant, and thus may have excellent ionic conductivity for lithium ions. Thus, the argyrodite-based compound may be provided as an electrolyte of an all-solid-state lithium battery to enhance the electrical performance (discharge capacity, discharge efficiency, lifespan, and the like) of a battery.

For example, in the argyrodite-based compound of the formula LPSH(Li₇₋ₓPS₆₋ₓHaₓ) (wherein Ha is a halogen element or a polyatomic anion (molecular anion), which is one or a combination of two or more thereof, and 0.5 < x < 2), a PS₄³⁻ unit structure, which is the main structure, consists of phosphorus and sulfur. Phosphorus and sulfur have a small difference (0.39) in electronegativity, and accordingly, phosphorus and sulfur are bonded with weak bonding strength. Therefore, during charging and discharging of an all-solid-state lithium battery, the electrolyte may be decomposed, resulting in deteriorated lifespan characteristics and electrical performance of the all-solid-state lithium battery.

In an optional embodiment, the argyrodite-based compound may further include a Group 13 element, and the compound having an argyrodite crystal structure may be partially substituted with the Group 13 element. For example, in the argyrodite-based compound having an argyrodite crystal structure and containing lithium (Li) at the A site, phosphorus (P) at the B site, sulfur (S) at the C site, and a halogen (Ha) element at the D site, lithium (Li) occupying the A site of the argyrodite crystal structure may be partially substituted with the Group 13 element [Bo].

In case that lithium (Li) occupying the A site of the argyrodite-based compound is partially substituted with the Group 13 element [Bo], a [Bo]S₃ triangular structure having very high binding strength with sulfur(S) may be formed, thereby enhancing the argyrodite crystal structure, resulting in structural stability and increased density.

For example, the Group 13 element may include one or more elements selected from boron (B), aluminum (Al), gallium (Ga), and indium (In), and lithium (Li) occupying the A site of the argyrodite-based compound may be partially substituted with the Group 13 element [Bo]. In this regard, the Group 13 element [Bo] may be positioned at the A site of the argyrodite-based compound by replacing three lithium (Li) atoms that occupy the A site of the argyrodite-based compound as in Formula 1, thereby forming a [Bo]S₃ triangular structure, resulting in high structural stability.

Formula 1 Li_{(7-x-3y)}[Bo]_{y}PS₍₆₋ₓ₎Haₓ(0.5<x<2, 0.5 mol%<y<5 mol%)

The high structural stability due to forming a [Bo]S₃ triangular structure by substituting three lithium (Li) atoms occupying the A site of the argyrodite-based compound with the Group 13 element [Bo] may be predicted from density functional theory (DFT) calculation results obtained using a supercomputer.

In an optional embodiment, the argyrodite-based compound may be prepared by synthesizing precursors including Li₂S, P₂S₅, LiCl, and LiBr, and the sulfide-based solid electrolyte according to embodiments of the present disclosure may be synthesized by inclusion of the Group 13 element [Bo] in precursors including Li₂S, P₂S₅, LiCl, and LiBr.

In this regard, the precursors including Li₂S, P₂S₅, LiCl, and LiBr may be substituted with a precursor including the Group 13 element [Bo] through a reduction in the amounts of some of the precursors. For example, the precursor including the Group 13 element [Bo] may be included in an amount of 0.5 mol% to 5 mol% with respect to the total precursors.

In an optional embodiment, the Group 13 element [Bo] may include one or more elements selected from boron (B), aluminum (Al), gallium (Ga), and indium (In), and may include, for example, boron (B) or aluminum (Al).

For example, the sulfide-based solid electrolyte according to embodiments of the present disclosure may further include a compound of the Group 13 element [Bo] and sulfur (S), in addition to the precursors including Li₂S, P₂S₅, LiCl, and LiBr. For example, the compound of the Group 13 element [Bo] and sulfur (S) may include B₂S₃ or Al₂S₃.

B₂S₃ or Al₂S₃ may be added in an amount of 0.2 mol% to 5 mol%, preferably 0.5 mol% to 5 mol%, and more preferably 0.5 mol% to 1.5 mol%, with respect to the total precursors including Li₂S, P₂S₅, LiCl, and LiBr.

In case that B₂S₃ is added in an amount less than 0.2 mol% with respect to the total precursors including Li2S, P2S5, LiCl, and LiBr, the BS3 triangular structure is formed at an excessively small level, and thus the effect thereof may be insignificant, and it may be difficult to suppress the generation of hydrogen sulfide, which will be described below. In case that B₂S₃ exceeds 5 mol% with respect to the total precursors including Li2S, P2S5, LiCl, and LiBr, a parent structure may collapse, leading to generation of impurities, which may result in reduced ionic conductivity.

In case that Al₂S₃ is added in an amount less than 0.2 mol% with respect to the total precursors including Li2S, P2S5, LiCl, and LiBr, the AIS3 triangular structure is formed at an excessively small level, and thus the effect thereof may be insignificant, and it may be difficult to suppress the generation of hydrogen sulfide, which will be described below. In case that Al₂S₃ exceeds 5 mol% with respect to the total precursors including Li2S, P2S5, LiCl, and LiBr, a parent structure may collapse, leading to generation of impurities, which may result in reduced ionic conductivity.

In the present disclosure, to synthesize the argyrodite-based compound, the precursors including Li2S, P2S5, LiCl, and LiBr, and the compound of the Group 13 element [Bo] and sulfur (S) have been described as examples. However, to partially replace lithium (Li) occupying the A site of the argyrodite-based compound, various precursors may be used in the preparation process.

In order to replace lithium (Li), sulfide-based precursors including a Group 13 element, a divalent element, and a tetravalent element, which are less expensive than Li₂S, may be used instead of the expensive Li₂S precursor. By using the sulfide-based precursors including a Group 13 element, a divalent element, and a tetravalent element, expensive Li₂S may be used in a slightly reduced amount, thereby increasing price competitiveness of the material.

In case that lithium (Li) occupying the A site of the argyrodite-based compound is partially substituted by using the precursor including a divalent element, the overall structure of the sulfide-based solid electrolyte having an argyrodite structure may change. In case that lithium (Li) occupying the A site of the argyrodite-based compound is partially substituted by using the precursor including a tetravalent element, tetravalent elements that may be used as precursors, for example, silicon (Si), germanium (Ge), and the like, are more expensive than Group 13 elements, making it difficult to secure economic efficiency.

The sulfide-based solid electrolyte according to an embodiment of the present disclosure may have increased price competitiveness through substitution of some in a crystal structure with the Group 13 element.

In the argyrodite structure, sulfur generally has two bonds, Li-S and P-S. When sulfur reacts with moisture in the air, the Li-S bond or the P-S bond changes to a Li-O or P-O bond, forming an H-S bond, which may result in the generation of hydrogen sulfide (H₂S) gas that is harmful to the human body. However, some in the crystal structure of the sulfide-based solid electrolyte according to an embodiment of the present disclosure are substituted with the Group 13 element, such that, between the Li-S bond or the P-S bond that changes to a Li-O or P-O bond when sulfur reacts with moisture in the air, the weak Li-S bond is partially substituted with the relatively strong Bo-S bond, thus making it difficult to easily form an H-S bond due to the Bo-S bond having high binding strength, thereby suppressing the generation of hydrogen sulfide (H₂S) gas, which may result in enhanced atmospheric stability.

Therefore, according to embodiments of the present disclosure, the sulfide-based solid electrolyte may exhibit enhanced electrochemical stability and atmospheric stability through substitution of some in a crystal structure with a Group 13 element.

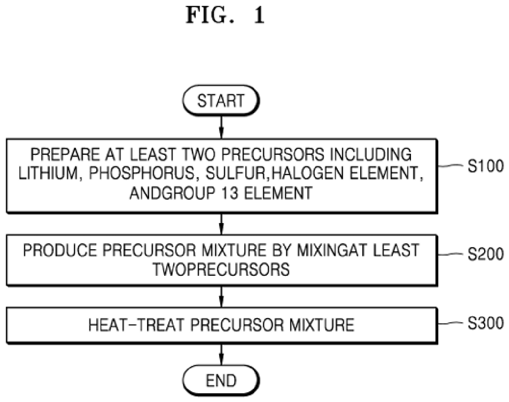

Another embodiment of the present disclosure relates to a method of preparing a sulfide-based solid electrolyte, which will be described with reference to FIG. 1 summarizing an order of the preparation method. According to the other embodiment, a sulfide-based solid electrolyte prepared by the method of preparing a sulfide-based solid electrolyte may exhibit enhanced electrochemical stability and atmospheric stability through substitution of some in a crystal structure with a Group 13 element.

The method of preparing a sulfide-based solid electrolyte, according to another embodiment of the present disclosure, may include preparing two or more precursors including lithium, phosphorus, sulfur, a halogen element, and a Group 13 element (S100), producing a precursor mixture by mixing the at least two precursors (S200), and heat-treating the precursor mixture (S300).

In the preparation of the two or more precursors (S100), the two or more precursors may include lithium compounds such as lithium sulfide (Li₂S), lithium halide (LiA; A is a halogen), and the like, or a combination thereof. In other embodiments, the two or more precursors may include a sulfur compound such as phosphorus pentasulfide (P₂S₅) or the like, and may include boron-based compounds such as boron sulfide (B₂S₃), aluminum sulfide (Al₂S₃), and the like, or a combination thereof.

In the production of the precursor mixture by mixing the at least two precursors (S200), the two or more precursors may be mixed by a mechanical synthesis method such as mechanical milling or a wet synthesis method using an organic solvent. For example, the mechanical milling may include ball milling, and the ball milling may be performed by any known ball milling device used for high-energy ball milling, such as a vibratory mill, a Z-mill, a planetary ball-mill, an attrition-mill, a SPEX mill, a low-temperature crusher, a friction mill, a shaker mill, a stirred ball mill, a mixer ball mill, and a vertical and horizontal attritor. However, the present disclosure is not particularly limited, and any method that may be used in the art as a method of mechanically contacting the precursors may be used.

In other embodiments, the wet synthesis method may be, for example, a method in which the precursors are mixed with a reactive solvent or a non-reactive solvent by ball milling or planetary milling. For example, the precursors may be mixed with heptane, which is a non-reactive solvent, by ball milling using 2 mm to 5 mm balls.

In the heat treatment of the precursor mixture (S300), the heat treatment may be performed at a temperature of 400 to 550 °C for 5 to 24 hours under an Ar atmosphere.

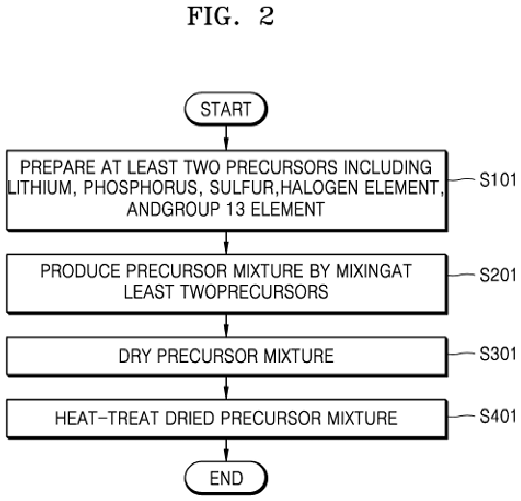

Referring to FIG. 2, the method of preparing a sulfide-based solid electrolyte may include preparing two or more precursors including lithium, phosphorus, sulfur, a halogen element, and a Group 13 element (S101), producing a precursor mixture by mixing the two or more precursors (S201), and heat-treating the precursor mixture (S301), and may further include, before the heat treatment, drying the precursor mixture (S401).

In the preparation of the two or more precursors including lithium, phosphorus, sulfur, a halogen element, and a Group 13 element (S101), the two or more precursors may include lithium compounds such as lithium sulfide (Li₂S), lithium halide (LiA; A is a halogen), and the like, or a combination thereof. In other embodiments, the two or more precursors may include a sulfur compound such as phosphorus pentasulfide (P₂S₅) or the like, and may include boron-based compounds such as boron sulfide (B₂S₃), aluminum sulfide (Al₂S₃), and the like, or a combination thereof.

In the production of the precursor mixture by mixing the two or more precursors (S201), the two or more precursors may be mixed by a mechanical synthesis method such as mechanical milling or a wet synthesis method using an organic solvent. For example, the mechanical milling may include ball milling, and the ball milling may be performed by any known ball milling device used for high-energy ball milling, such as a vibratory mill, a Z-mill, a planetary ball-mill, an attrition-mill, a SPEX mill, a low-temperature crusher, a friction mill, a shaker mill, a stirred ball mill, a mixer ball mill, and a vertical and horizontal attritor. However, the present disclosure is not particularly limited, and any method that may be used in the art as a method of mechanically contacting the precursors may be used.

In other embodiments, the wet synthesis method may be, for example, a method in which the precursors are mixed with a reactive solvent or a non-reactive solvent by ball milling or planetary milling. For example, the precursors may be mixed with heptane, which is a non-reactive solvent, by ball milling using 0.1 mm to 5 mm balls.

In the heat treatment of the precursor mixture (S301), the heat treatment may be performed at a temperature of 400 °C to 550 °C for 5 to 24 hours under an Ar atmosphere.

In the drying of the precursor mixture (S401), the precursor mixture may be vacuum-dried at 60 °C to 120 °C to remove the organic solvent. In other embodiments, in the production of the precursor mixture (S201), introduced 0.1 mm to 5 mm balls may be separated from the dried precursor mixture by using a 200 µm sieve.

### [Example 1]

Li₂S, P₂S₅, LiCl, and LiBr were prepared as precursors, and B₂S₃ was added in an amount of 0.8 mol% with respect to the total prepared precursors, to adjust the mass of the total precursors to 60 g.

The precursors were ball-milled with heptane, which is a non-reactive solvent, by using 3 mm balls, and then the ball milled solution was vacuum-dried at 80 °C to remove the organic solvent, followed by removing the balls used in the ball milling by using a 200 µm sieve to thereby obtain precursor powder.

Thereafter, the precursor powder was heat-treated at 500 °C for 6 hours to prepare Example 1.

### [Example 2]

A sulfide-based solid electrolyte was prepared in the same manner as in Example 1, except that 1.1 mol% of B₂S₃ was added to the precursors.

### [Example 3]

A sulfide-based solid electrolyte was prepared in the same manner as in Example 1, except that 1.4 mol% of B₂S₃ was added to the precursors.

### [Example 4]

A sulfide-based solid electrolyte was prepared in the same manner as in Example 1, except that 1.6 mol% of B₂S₃ was added to the precursors.

### [Example 5]

Li₂S, P₂S₅, LiCl, and LiBr were prepared as precursors, and Al₂S₃ was added in an amount of 0.8 mol% with respect to the total prepared precursors, to adjust the mass of the total precursors to 60 g.

The precursors were ball-milled with heptane, which is a non-reactive solvent, by using 3 mm balls, and then the ball-milled solution was vacuum-dried at 80 °C to remove the organic solvent, followed by removing the balls used in the ball milling by using a 200 µm sieve to thereby obtain precursor powder.

Thereafter, the precursor powder was heat-treated at 500 °C for 6 hours to prepare Example 1.

### [Example 6]

A sulfide-based solid electrolyte was prepared in the same manner as in Example 5, except that 1.1 mol% of Al₂S₃ was added to the precursors.

### [Example 7]

A sulfide-based solid electrolyte was prepared in the same manner as in Example 1, except that 1.4 mol% of Al₂S₃ was added to the precursors.

### [Example 8]

A sulfide-based solid electrolyte was prepared in the same manner as in Example 1, except that 1.6 mol% of Al₂S₃ was added to the precursors.

### [Comparative Example]

Li₂S, P₂S₅, LiCl, and LiBr were prepared as precursors, and the mass of the precursors was adjusted to 60 g.

The precursors were ball-milled with heptane, which is a non-reactive solvent, by using 3 mm balls, and then the ball-milled solution was vacuum-dried at 80 °C to remove the organic solvent, followed by removing the balls used in the ball milling by using a 200 µm sieve to thereby obtain precursor powder.

Thereafter, the precursor powder was heat-treated at 500 °C for 6 hours to prepare Comparative Example.

### [Manufacture Example]

1 wt% of a LiNbO₃-coated NCM811 cathode active material having a particle size of 8 to 10 µm, each of the electrolytes synthesized by the methods of Examples 1 to 8 and Comparative Example, a carbon black-based conductive material were mixed by using a mortar and pestle in a weight ratio of 70:30:3.

A pressurized cell was manufactured using Li-In as a counter electrode and using an unsubstituted Li_{5.5}PS_{4.5}Cl_{0.75}Br_{0.75} electrolyte in a separator layer.

### [Experimental Example 1]

Ionic conductivity was measured using each pressurized cell. The thickness and weight of a pressurized pellet created during the measurement of each pressurized cell were measured together to measure compressed density.

### [Experimental Example 2]

A charging/discharging test was conducted using each pressurized cell, and charging and discharging were performed at a current density of 0.05 C at 30 °C.

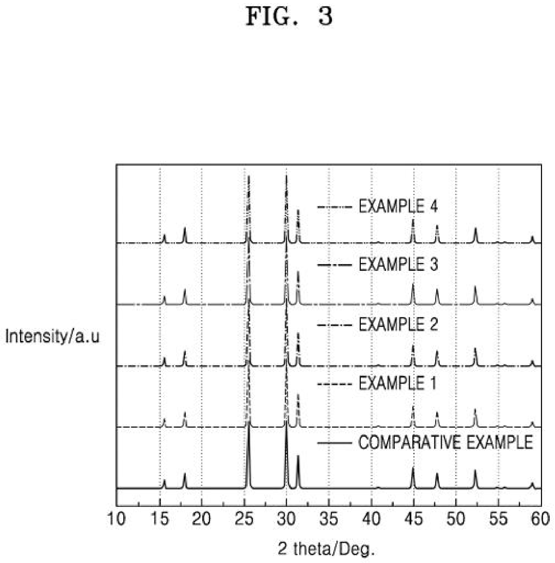

FIG. 3 is a graph showing XRD measurement results according to embodiments.

Referring to FIG. 3, a graph showing the results of XRD measurement of Examples 1 to 4 in which B₂S₃ was added to the precursors, and Comparative Example can be confirmed.

Referring to the graph of FIG. 3, it can be confirmed that peaks are formed at the same points in Examples 1 to 4 in which B₂S₃ was added to the precursors, and Comparative Example in which nothing was added. That is, it can be seen that all of Examples 1 to 4 in which B₂S₃ was added to the precursors formed argyrodite structures.

**Table 1**

| Sample | Ionic conductivity | Compressed density |
|---|---|---|
| Comparative Example | 7.54 mS/cm | 1.7838 |
| Example 1 | 7.27 mS/cm | 1.798 |
| Example 2 | 7.34 mS/cm | 1.8011 |
| Example 3 | 6.65 mS/cm | 1.8171 |
| Example 4 | 4.88 mS/cm | 1.8425 |

Table 1 shows the ionic conductivity and compressed density of each of Examples 1 to 4 and Comparative Example, as measured by the method of Experimental Example 1. It can be confirmed that the ionic conductivity of Example 2, in which 1.1 mol% of the B₂S₃ precursor was added, was 7.34 mS/cm, which is similar to the ionic conductivity of Comparative Example in which nothing was added, i.e., 7.54 mS/cm. It can also be seen that the compressed density increases from 1.798 to 1.8425 for Examples 1 to 4. That is, it can be seen that the more the B₂S₃ precursor is added, the more the compressed density of the sulfide-based solid electrolyte increases. From these results, it can be confirmed that the more the lithium occupying the A site of the argyrodite-based compound is partially substituted with boron (B), the more the [Bo]S₃ triangular structure having very high binding strength with sulfur is formed, thereby enhancing the argyrodite crystal structure, resulting in structural stability and increased density.

**Table 2**

| Sample | Capacity | | Coulombic efficiency (%) |
|---|---|---|---|
| | Charge (mAh/g) | Discharge (mAh/g) | |
| Comparative Example | 214.35 | 169.42 | 79.04 |
| Example 1 | 227.85 | 172.09 | 75.53 |
| Example 2 | 232.65 | 182.31 | 78.36 |
| Example 3 | 235.28 | 179.97 | 76.49 |
| Example 4 | 222.65 | 172.49 | 77.47 |

Table 2 shows the charging/discharging results of Examples 1 to 4 and Comparative Example, as measured by the method of Experimental Example 2. Referring to Table 2, it can be seen that Examples 1 to 3 show a tendency of increased structurally stable portions and increased capacity performance as the doping amount of boron (B) increases. As confirmed in Table 1 above, Examples 1 to 4 show a tendency of reduced ionic conductivity as the doping amount of boron (B) increases, whereas, as can be seen from Table 2, it can be confirmed that Examples 1 to 4 show coulombic efficiency similar to Comparative Example and high discharge capacity, in spite of reduced ionic conductivity.

That is, it can be confirmed that, in the case of boron (B) having a small atomic size and high binding strength, the ionic conductivity of each of the pressurized cells manufactured using Examples 1 to 4 decreases linearly, but Example 2 in which about 1.1 mol% of B₂S₃ was added exhibits high discharge capacity and high coulombic efficiency without greatly reducing ionic conductivity.

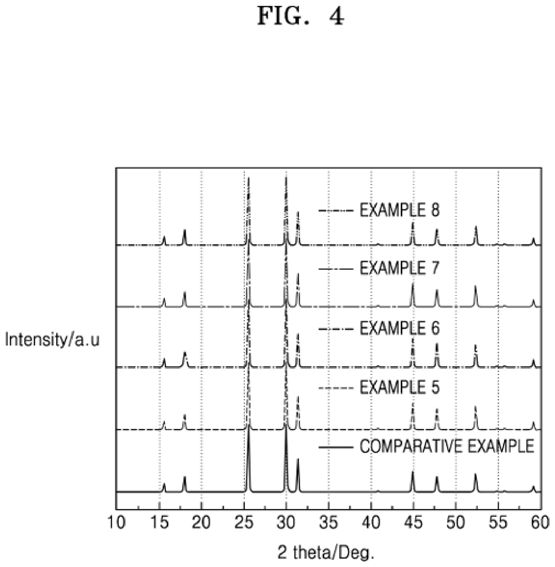

FIG. 4 is a graph showing XRD measurement results according to other embodiments.

Referring to FIG. 4, a graph showing the results of XRD measurement of Examples 5 to 8 in which Al₂S₃ was added to the precursors, and Comparative Example can be confirmed.

Referring to the graph of FIG. 4, it can be confirmed that peaks are formed at the same points in Examples 5 to 8 in which Al₂S₃ was added to the precursors, and Comparative Example in which nothing was added. That is, it can be seen that all of Examples 5 to 8 in which Al₂S₃ was added to the precursors formed argyrodite structures.

**Table 3**

| Sample | Ionic conductivity | Compressed density |
|---|---|---|
| Comparative Example | 7.54 mS/cm | 1.7838 |
| Example 5 | 7.14 mS/cm | 1.8049 |
| Example 6 | 6.43 mS/cm | 1.7975 |
| Example 7 | 6.71 mS/cm | 1.8 |
| Example 8 | 6.99 mS/cm | 1.8142 |

Table 3 shows the ionic conductivity and compressed density of each of Examples 5 to 8 and Comparative Example, as measured by the method of Experimental Example 1. It can be confirmed that the ionic conductivity of Example 5, in which 0.8 mol% of the Al₂S₃ precursor was added, was 7.14 mS/cm, which is similar to the ionic conductivity of Comparative Example in which nothing was added, i.e., 7.54 mS/cm. When comparing Examples 5 and 8, it can be seen that the compressed density increases from 1.8049 to 1.8142. This demonstrates that the compressed density of the sulfide-based solid electrolyte may increase depending on the amount of the added Al₂S₃ precursor. From these results, it can be confirmed that the more the lithium (Li) occupying the A site of the argyrodite-based compound is partially substituted with aluminum (Al), the more the [Bo]S₃ triangular structure having very high binding strength with sulfur is formed, thereby enhancing the argyrodite crystal structure, resulting in structural stability and increased density.

**Table 4**

| Sample | Capacity | | Coulombic efficiency (%) |
|---|---|---|---|
| | Charge (mAh/g) | Discharge (mAh/g) | |
| Comparative Example | 214.35 | 169.42 | 79.04 |
| Example 5 | 230.04 | 177.54 | 77.18 |
| Example 6 | 224.74 | 173.15 | 77.04 |
| Example 7 | 219.22 | 169.01 | 77.10 |
| Example 8 | 234.29 | 183.59 | 78.36 |

Table 4 shows the charging/discharging results of Examples 5 to 8 and Comparative Example, as measured by the method of Experimental Example 2. Referring to Table 4, it can be seen that Examples 5 to 8 show a tendency of increased structurally stable portions and increased capacity performance as the doping amount of aluminum (Al) increases. As confirmed in Table 3 above, Examples 5 to 8 show a tendency of reduced ionic conductivity as the doping amount of aluminum (Al) increases, whereas, as can be seen from Table 4, it can be confirmed that Examples 5 to 8 show a tendency of coulombic efficiency similar to Comparative Example and high discharge capacity, in spite of reduced ionic conductivity.

That is, it can be confirmed that, in the case of aluminum (Al) having a relatively large atomic size and relatively small binding strength compared to boron (B), in the pressurized cells manufactured using Examples 5 to 8, Examples 5 to 7 in which 0.8 mol% to 1.4 mol% of Al₂S₃ was added exhibit ionic conductivity reduced to some extent, whereas Example 8 in which 1.6 mol% of Al₂S₃ was added has the characteristics of high discharge capacity and high coulombic efficiency, showing rather high ionic conductivity.

Therefore, according to embodiments of the present disclosure, the sulfide-based solid electrolyte may exhibit enhanced electrochemical stability and atmospheric stability, and enhanced electrochemical properties, through substitution of some in a crystal structure with a Group 13 element.

While the present disclosure has been described with reference to embodiments illustrated in the drawings, this is provided for illustrative purposes only, and it will be understood by those of ordinary skill in the art that various changes and modifications may be made therefrom. Therefore, the true technical scope of the present disclosure should be defined by the technical spirit of the appended claims.

## Claims

1. A sulfide-based solid electrolyte comprising an argyrodite-based compound that contains lithium, phosphorus, sulfur, a halogen element, and a Group 13 element and has an argyrodite crystal structure,
wherein the lithium in the argyrodite crystal structure of the argyrodite-based compound is partially substituted with the Group 13 element.

2. The sulfide-based solid electrolyte of claim 1,
wherein the Group 13 element is substituted in an amount of 0.5 mol% to 5 mol%

3. The sulfide-based solid electrolyte of claim 1,
wherein the Group 13 element comprises one or more elements selected from boron, aluminum, gallium, and indium.

4. The sulfide-based solid electrolyte of claim 1,
wherein the Group 13 element suppresses the generation of hydrogen sulfide gas by bonding to the sulfur.

5. A method of preparing a sulfide-based solid electrolyte, the method comprising:
preparing at least two precursors containing lithium, phosphorus, sulfur, a halogen element, and a Group 13 element;
producing a precursor mixture by mixing the at least two precursors; and
heat-treating the precursor mixture,
wherein the precursor containing the Group 13 element comprises one or more compounds selected from B₂S₃, Al₂S₃, Ga₂S₃, and In₂S₃.

6. The method of claim 5,
further comprising, before the heat treatment, drying the precursor mixture.

7. The method of claim 5,
wherein the precursor containing the Group 13 element is added in an amount of 0.5 mol% to 5 mol% with respect to the total lithium.

8. The method of claim 5,
wherein, in the production of the precursor mixture by mixing the at least two precursors, the at least two precursors are mixed through mechanical milling or wet milling.
